# EUROPEAN PATENT SPECIFICATION

(11) **EP 0 269 875 B1**
(45) Date of publication and mention of the grant of the patent: **03.02.1993**
(21) Application number: 87115964.6
(22) Date of filing: 30.10.1987
(51) Int. Cl.: G06F 15/20

(54) **Forms processor with controlled remote revision**
Formularverarbeitungsgerät mit ferngesteuerter Überarbeitung
Processeur de formulaires avec une révision commandée à distance

(30) Priority: 01.12.1986 US 936294
(43) Date of publication of application: 08.06.1988
(73) Proprietor: International Business Machines Corporation, Armonk, N.Y. 10504 (US)
(72) Inventor: Elphick, Simon James, Edinburgh Lothian Region Scotland EH14EW (GB); Wickes, Robin Michael, Edinburgh Lothian Region Scotland EH91RP (GB)
(74) Representative: Jost, Ottokarl, Dipl.-Ing.

(56) References cited:
- EP-A- 0 066 063
- EP-A- 0 067 290
- EP-A- 0 158 766
- US-A- 4 204 206
- IBM TECHNICAL DISCLOSURE BULLETIN, vol. 28, no. 4, September 1985, pages 1623-1628, IBM Corp., New York, US; Method for creating annotation data"

## Description

The invention relates generally to the processing of text information and more specifically to the processing of text information as forms being filled out by administrative personnel. More particularly, letters, loan and insurance applications, for example are prepared at the computer work station of a teller or agent serving the public and the prepared item is sent to another work station which may be connected to the same or a different computer in the network for approval by a supervisory person. The system permits the supervisor to revise the variable portions of the document but does not permit change in the text body of the document.

Prior art text processing work stations as well as data processing work stations have permitted an operator to compose documents using standard forms which are then filled in by the operator to create a letter, application or other document. These prior art systems include the Professional Office System program product marketed by IBM Corp. for use on large host computers and the Displaywrite program product marketed by IBM Corp. for use with the IBM Personal Computer. U.S. Patents 4,429,372 and 4,454,576 are exemplary of the prior art. The prior art has a disadvantage in that when an operator has finished a document, that document is a homogenous entity discrete from the shell document and data from which it was created. In subsequent revision the entire document including both the fixed and variable text must be handled as a whole for modification. Thus the fixed portion may be changed either willfully or inadvertently by an operator.

Further, the prior art provides no information about the nature of the variable text values that have been merged into the document. Though prompts may have been available to the creator at one computer, they will not be available to the revisor at another computer.

In the IBM Professional Office System, a document can be kept in draft form in the computer on which it was created. When the document is transmitted to another computer, it can only be sent as a committed document and the protection of the structured creation is not available at the other computer. This limitation is caused by the fact that the environment, that is the tables which permit the computer to create the document from the standard form and the variables entered by the user, are only available in the computer in which the document was first created. They are not sent with the document when it is sent to another computer.

There is a need in the finance, insurance and other similar industries, for a computer network text processing system which can make efficient use of the vast amounts of text information already stored in the computer data bases of an organization such as a bank or insurance company. There is also a need in these industries for a text processing system that is relatively structured so as to limit the freedom and flexibility of authors of letters and documents. Such limits are necessary to control the legal obligations of the institutions whose employees create correspondence to customers of the institution. Clearly missing from prior art text processing methods is the ability to forward draft documents to supervisory persons who may be at other remote sites or at the main office to obtain approvals, limits, and other inputs as well as modifications to a draft document in the same structured and controlled manner as the draft document was created.

The invention provides for draft documents to be electronically sent from one computer to another in a network of computers. This is made possible by sending the draft in the form of a novel work in progress (WIP) document. In one embodiment of the invention, the WIP document is a combination of a shell document with a variable reply data set, and a shell detail data set. In the preferred embodiment, the WIP document is a combination of a merged portion, a variable reply data set, and a shell detail data set. In the following description, the words data set are used in a broad sense to mean a collection or list of information whether stored in memory of a computer or on a magnetic disk.

The merged portion is created in the system of the invention by merging the variable text stored in the variable reply data set into the shell document. The shell document is created only once by the main office and is carefully reviewed to define the legal liabilities of the institution. The shell document is then transmitted to the computers which control the various work stations of tellers or agents and their supervisors. The shell document contains the unchangeable text of a merged portion whereas the variable reply data set contains the text that is permitted to be changed from document to document including items such as name, address, loan limit etc. The system of the invention uses the shell detail data set to display messages prompting the user to enter text for some variables and invokes application programs identified in the shell detail data set to retrieve text for other variables from existing data bases. The variable text entered and retrieved under the system control are stored into the variable reply data set.

When the WIP document is transmitted to a supervisory person, that person uses the same programs of the system of the invention which are made available in the computer at his or her work station. These programs will rarely change except perhaps to correct an error or add another feature. The shell detail data set in contrast must be changed as often as the shell document is changed and such changes can occur between the time that a WIP document is created and when it is modified and approved by a supervisor. For this reason the shell detail data set is made part of the WIP document as it is created. Although the variable text values in the variable reply data set are also in the merged portion of the WIP, they are also made separately available in the WIP document to save the processing time that would be needed to extract them from the merged portion.

The system of the invention uses the WIP document to display to the supervisor, the merged portion for approval. When the supervisor wishes or needs to modify the document, the system uses the shell detail data set and variable reply data set which are also part of the WIP document to display the prompt messages and values of the variables entered by the person who created the WIP document. Where text for a variable has not been entered, only the prompt message is displayed, prompting the supervisor to enter text for the variable. The variable text values entered and or modified by the supervisor are stored into the variable reply data set and the merged portion of the WIP document.
Figure 1 shows an overview of a network of computers in which the invention finds utility.
Figure 2 is a view of the screen of a work station on which the shell document is being created.
Figure 3 is a view of the screen of a work station on which the variable table for the shell document is being created.
Figure 4 shows the format of the shell document 4A, the shell variable table 4B, the shell detail data set 4C, the variable reply data set 4D and the WIP document 4E.
Figure 5 is the main flow diagram showing how the invention is used by operators and supervisors. Figures 5A, 5B, 5C, and 5D are detailed screens that are seen by a person using the preferred embodiment of the invention according to Figure 5.

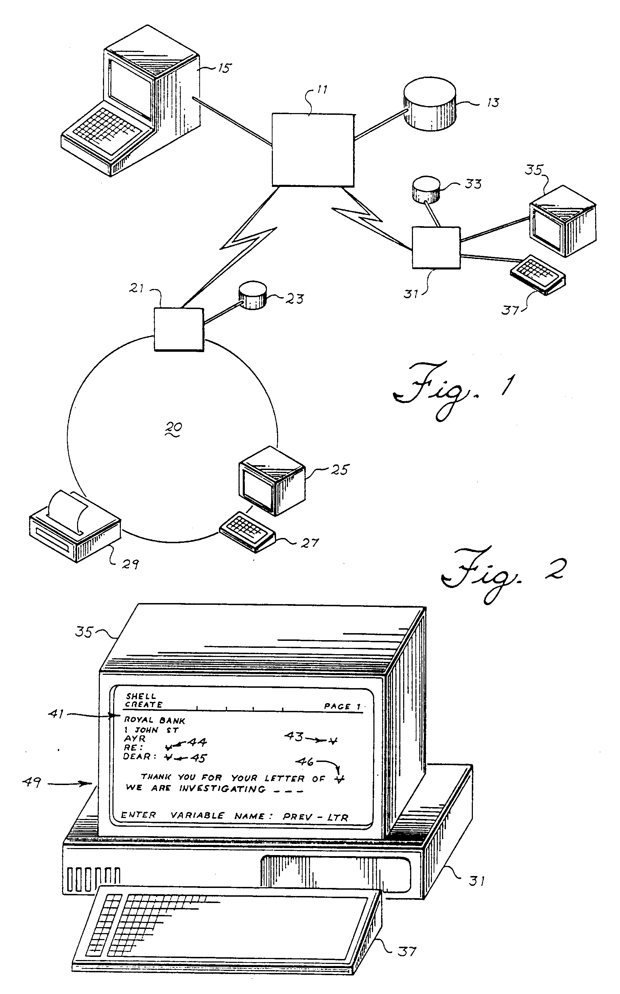

Referring to Figure 1, a block diagram of a multiple computer network is shown. Host computer 11 is supported by direct access storage 13 and a keyboard display terminal 15. Computer 11 is a large computer at a central office of a bank or insurance company and the main data base containing most of the customer information is kept on storage 13 which is preferably a disk storage device. Keyboard display 15 is available for use by supervisory persons such as for example managing loan officers who will be required to review, revise, and approve the loan applications prepared at remote branches of the bank.

Connected remotely to computer 11 by telecommunication lines is a smaller computer 21 having its own direct access disk storage device 23. Computer 21 is either a control computer such as the IBM 4702 used by financial institutions or alternately the processor portion of a personal computer. Connected to computer 21 by a bus is a display station 25, a keyboard 27, and a printer 29. When the computer 21 is a controller, there will be a plurality of keyboards, displays and printers, each sharing the processing services of computer 21. The combination of display 25, keyboard 27, printer 29, and computer 21 constitutes a remote work station as would be used by branch office staff such as a teller or administrative employee at a remote branch bank to prepare draft letters, loans applications and so forth.

Also connected to host computer 11 is a computer 31 shown in figure 1 as a personal computer. Computer 31 also has a display 35, a keyboard 37 and a disk 33. Computer 31 is contemplated in this embodiment to be a personal computer having a number of programs including the IBM Displaywrite program.

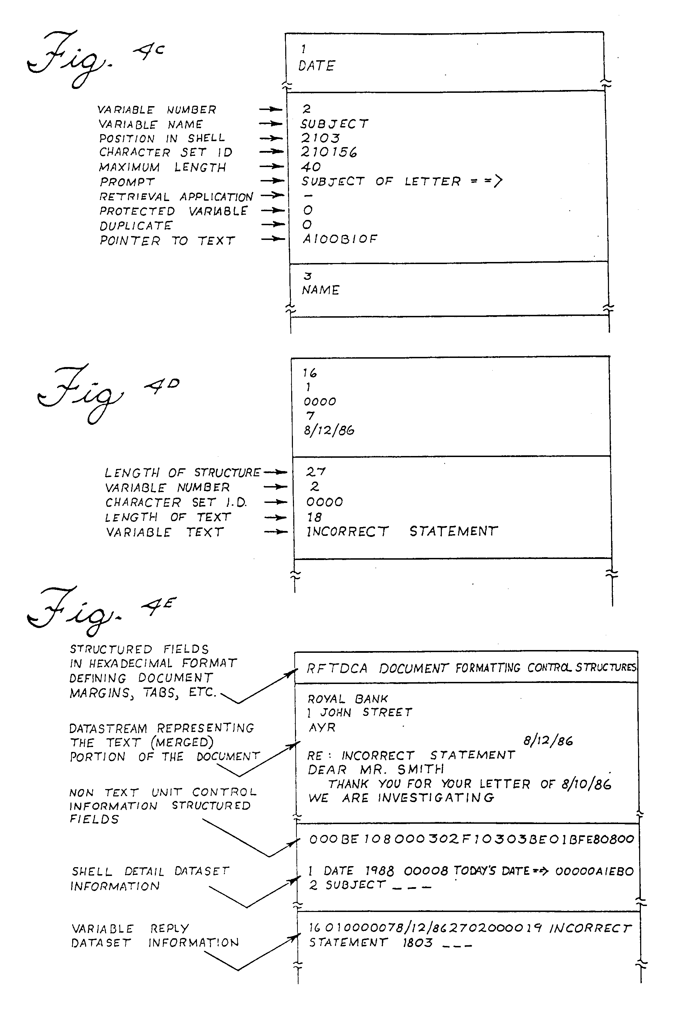

Figure 2 shows the screen of display 35 as computer 31 is being used to generate a shell document. The shell is being created as a .txt document using the IBM Displaywrite program. The .txt document will later be converted to a Document Content Architecture Revisable Form Text (RFTDCA) document as defined in IBM Reference Manual SC23-0758. All of the fixed or unchangeable text 41 of the shell is directly entered as text. Whenever a variable text word or phrase is to be later inserted, the shell author enters a control character 43, 44, 45, or 46 by pressing the INSTR/VARIABLE key. The Displaywrite program then prompts the author to enter a name of the variable as shown at 49. The variable name can have up to 16 characters which are incorporated into the shell document as a structured field. The shell document which has been created in figure 2 is converted to an RFTDCA document which can be sent to another computer such as computer 21 where it is stored on disk 23 as a text string file. The format of the shell document stored on disk 23 is shown in figure 4A.

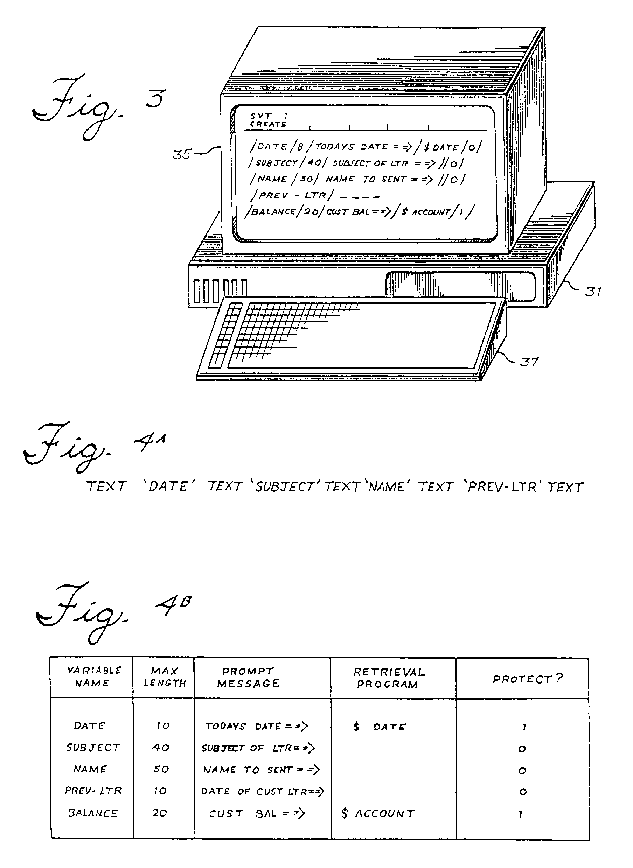

Figure 3 shows the screen of display 35 as computer 31 is being used to generate a shell variable table for the shell document created in Figure 2. The shell variable table is an easy way for the author of the shell to provide the information which will be stored in the shell detail data set. The shell variable table is also being created using the IBM Displaywrite program. Each line of text being entered by the shell author relates to one variable set up in the shell document. Like the shell document itself, the shell variable table is transmitted to each of the computers such as computer 21 at which structured documents will later be created according to the invention. The format of the shell variable table stored on disk 23 is shown in figure 4.

The creation of shell documents and shell variable tables using Displaywrite is done merely for convenience of the author of the shell and is preliminary to the method of the invention but does not constitute a part thereof.

It is also contemplated that for those variables that appear in most documents, a master variable table need only be created once and thereafter, the variable names defined in the master variable table can be used in many shell documents without the need to redefine them for each shell document. Of course if a different prompt message is desired or if it is to be a protected field whereas the variable as defined by the master table is changeable by the teller, then the variable simply is redefined in the shell variable table which takes precedence.

After the shell document and the shell variable table have been transmitted to the computer 21, and stored on disk 23, they are used to generate the shell detail data set which will later be made part of each work in progress (WIP) document created using the shell. A step in creating the shell detail data set is to extract a list of variable names from the shell document. The list is used to access the shell variable table and the master variable table, if one is used, to get the definitions of each variable to create the shell detail data set. In this description, the words data set are used in a broad sense to mean a collection or list of information regardless of where it may be stored.

Referring now to Figure 4A, the sequence of fixed text and variable names are shown indicating how the string of text and names are stored on disk 23. Figure 4B shows how the information entered onto the display 35 screen is converted to a shell variable table and stored on disk 23. These format figures are believed to be self explanatory and require very little dissertation except to indicate that the name, maximum length, prompt message, retrieval application program and protect flag are stored for each variable. The retrieval program is that program that will access an existing data base and retrieve such items as the date, a customers account balance and so forth. The protect flag indicates whether the operator can modify the variable text retrieved by the retrieval program, or enter variable text where none has been retrieved. An example is a case where the author of the shell may have decided not to let a teller modify an account balance retrieved by a program from the main data base. In Figure 4B, a binary 0 is an unprotected variable whereas a binary 1 indicates a protected variable which cannot he changed from the keyboard.

Attention is now drawn to Figure 4C where the format of the shell detail data set is set forth. The shell detail data set is important to the invention, not in its specific format but in the fact that it is appended to the shell along with the variable reply data set to create the work in progress (WIP) document of the invention. In this embodiment, the shell detail data set has an entry for each time a variable appears in the shell document and in the same sequence as the variables appear in the shell. Each entry is numbered and the number is the first record of each entry.

Taking for example the second entry which is the 'subject' variable, the name of the variable appears as the second field. The third field is the number of bytes of data preceding the variable in the shell document. The fourth field is the character set ID of the text immediately preceding the variable in the shell document. The fifth field through eighth field are taken directly from the shell variable table. They are maximum length of the variable text, the prompt message to be displayed, the name of the retrieval program, and the protection indicator respectively. The ninth field contains the number of the first entry where this same variable has been used before in the shell document. The use of this field allows the variable to be entered or retrieved only once but placed in the shell document as often as needed. The tenth field provides access to the variable text value, stored separately in the variable reply data set.

Figure 4D shows the format of the variable reply data set. Each entry has five fields. The first is the length of the entry expressed as a number of bytes. The second field is the number of the variable to which the entry relates. The third field contains the character set ID number if the character set to be used for the variable text is different from the character set used for the shell document at the point where the variable text is to be inserted. The character set ID allows a variable to appear in the final document in a different font for highlighting and other purposes. Where the character sets are the same, the field contains all zeros. The fourth field contains the length of the actual variable text which has been retrieved by a program or entered by the person creating the WIP document. This is expressed as a number of bytes. There is only one entry in the variable reply data set for each variable for which text has been supplied, no matter how often it appears in the shell. Variables that have not yet been supplied with variable text do not appear in the variable reply data set.

Figure 4E shows the format of a WIP document implemented in RFTDCA including the position of the non text unit type identifier 000BE108000302F10303BE.

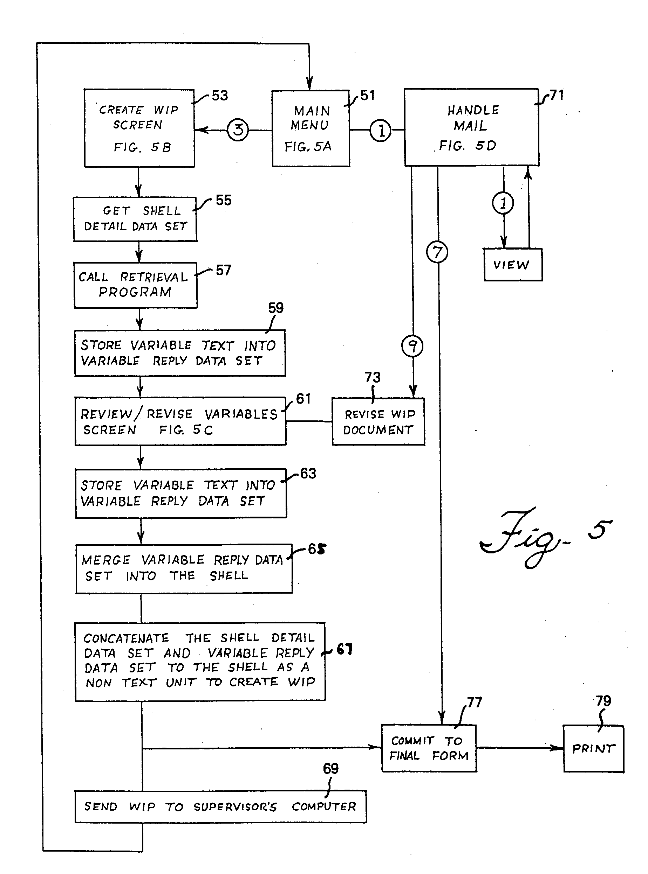

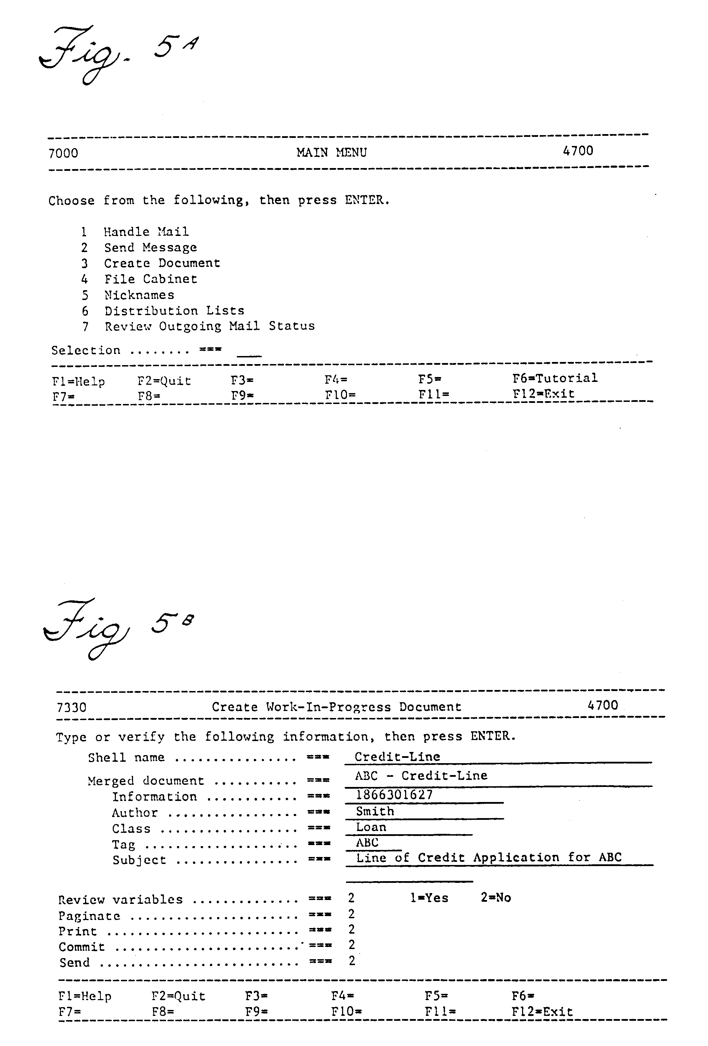

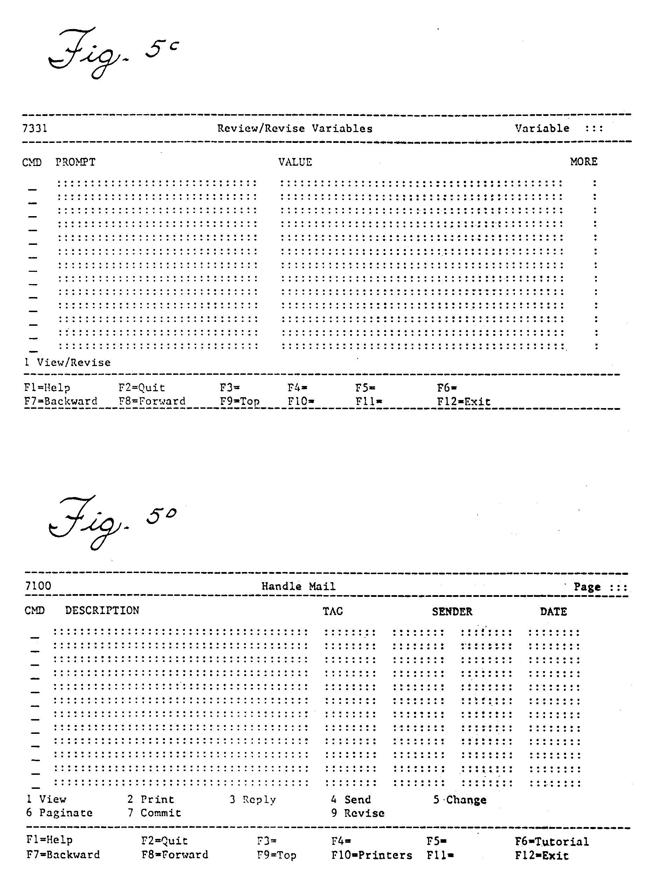

Figure 5 is a flow diagram showing how branch office staff use the method of the invention on a computer controlled work station to create a work in progress (WIP) document, have it reviewed and possibly revised at a different computer before committing it to final form. The teller for example may wish to prepare a line of credit application for a merchant customer who wants to build up inventory in anticipation of brisk sales. The teller begins at main menu block 51. The actual screen seen by the teller is shown in Figure 5A. To create a line of credit application, in the form of a WIP document, the teller chooses selection 3 and presses the enter key. That causes the flow to proceed to block 53 which is the screen shown in Figure 5B. The teller then fills in the blanks of the screen starting with the name of the shell document, such as credit-line, and the name of the document being created such as ABC-credit-line if the credit line is being established for the ABC company.

The information line is optional and may be used to enter any helpful facts about the WIP document such as the account number of the merchant requesting the line of credit. The remaining lines are the name of the teller preparing the WIP document, class, tag and subject. They provide a means of categorizing documents. At a later time the teller can list all previously created documents that are of a particular class, tag, or subject. For example all documents having a tag of ABC. The remaining selections listed in Figure 5B are then made, such as to review variables if some are to be entered from the keyboard, by entering the numeral one. The enter key is then pressed to move to block 55.

At block 55 the shell detail data set is read from disk 23 and a retrieval program is called at block 57 if the data is to be retrieved from a data base. The retrieved variable text is placed into the variable reply data set at block 59.

The method then proceeds to block 61 where the review/revise screen shown in Figure 5C is displayed. The program embodiment of block 61 appears in appendix 2. At this time retrieved variable text is displayed. The teller modifies the retrieved text as necessary, if not protected. The teller also key enters variable text for other unprotected variables in the shell if the text is known to the teller. The teller then presses the enter key to move to block 63 where the input variable text is placed in the variable reply data set.

At block 65 in this embodiment, the variable text is merged into the shell document to create the merged portion of the WIP document. The merged portion is that part of the WIP document that can be viewed on a display screen or printed. The flow then moves to block 67 where the WIP document is created by concatenating the shell detail data set and variable reply data set to the merged portion just created. The data sets are concatenated as non text units.

Non text units are structured fields as defined by RFTDCA. Several types of non text units exist in the prior art RFTDCA. The type of non text unit is identified by a value appearing within the structured field as shown in Figure 4E. A number of valid values and their location in the structured fields are defined in RFTDCA manuals. In order to implement the method of the invention in a network employing RFTDCA, a new value has been defined that uniquely identifies the data sets which constitute the environment of a WIP document. As heretofore described with respect to the preferred embodiment, these are the shell detail data set and the variable reply data set. The content in hexadecimal notation of the structured field prior to the first byte of the first data set is 000BE108000302F10303BExxxxE80800. The last BE characters in the value uniquely identifies a non text unit of the type used in this embodiment of the invention. Where a second non text unit is required to accommodate the data, the first byte of data in this second non text unit will be preceded by 000BE108000302F20303BExxxxE80800. In both examples, xxxx represents the length in bytes of the data included in the non text unit plus five bytes.

As was discussed earlier, in another embodiment, data sets are concatenated to the shell document to form the WIP. This shortens processing time when the WIP document is created but requires that it be merged at another computer to be reviewed. By sending a merged portion, the supervisor can review the document quickly and may approve without modifying it.

At block 69, the WIP document is transmitted to the computer 11 for review and approval by a loan officer for example. In this example of a line of credit application, the maximum amount of credit to be extended in the line of credit will likely be only determined by a loan officer at the main office and not by branch bank staff.

The loan officer at the main office also starts at block 51 with the main menu of Figure 5A. The loan officer selects the handle mail option 1. The flow proceeds to block 71 and displays the screen shown in Figure 5D. The loan officer can select 1 to simply view the WIP document which is accomplished by displaying the merged portion. In our example, the officer selects 9 to revise the variables because the maximum line of credit must be entered by the officer. Selection 9 proceeds to block 73.
From block 73 the flow moves to block 61 in Figure 5 to allow the officer to see the screen of Figure 5C.

After entering the maximum credit and reviewing the other variables entered by retrieval program or the teller, the officer presses the enter key to move to block 63. At block 63 the newly entered and revised variable text are stored and flow moves to block 65. At block 65 the new variable text is merged into the merged portion of the WIP document. At block 67 the data sets are concatenated to the merged portion and the reviewed WIP is returned to the teller for final processing.

Final processing involves blocks 51 and 71. In this case the teller may select view function 1 to proceed to block 75 and check that the document is complete and all variable text has been supplied. If the document is satisfactory, the teller exits back to block 71 where selection 7 is made to commit the document at block 77. At block 77 the data sets are disabled.

The creation method of the invention has now been completed and the document can be sent to another computer such as the merchants computer via electronic mail or the document can be printed at block 79 for signature and deposit with the postal services.

As can be seen from the foregoing description of the preferred embodiment, the invention effectively sends the environment of a document being created in draft form along with the document across system boundaries to allow only the variable text of the document to be revised. This is accomplished efficiently by including the variable reply data set and the shell detail data set as non text units concatenated to the merged portion. It will be appreciated by those skilled in the art that such draft documents can be revised without benefit of the invention but such revision is uncontrolled and therefore the bank or other institution is exposed to unpredictable legal liabilities based on the content of such documents. It will also be apparent to those skilled in the art of text processing systems that various changes can be made in the format and content of the data sets that are made part of the work in progress draft documents without departing from the spirit and scope of the invention. For example the variable reply need not be a data set but merely information stored in an area of memory in a defined format as shown in Figure 4D. When this reply information is to be sent as part of the WIP document, it is merely copied into a non text unit of the WIP document.

## Claims

1. The method of preparing a structured document in a network of computer (21) controlled keyboard displays comprising the steps of:
displaying (61) to an operator, from shell detail data, prompt messages to said operator which solicit entry of variable text to be merged into the unchangeable text of a related shell document which has been selected by said operator;
reading (61) from said keyboard (27) said variable text entered by said operator in response to said prompt messages;
establishing in the memory of the computer (21) controlling said display (25) to said operator variable reply data containing said variable text entered by said operator;
concatenating (67) said variable reply data and said shell detail data to said shell document to create a work in progress document, said shell document being separated from said shell detail data and said variable reply data by a non text unit type identifier;
transmitting (69) said work in progress document to another computer (11) in said network;
displaying (61) to another person at said another computer (11) from said shell detail data and from said variable reply data of said work in progress document, said prompt messages and said variable text entered by said operator;
reading (61) from said keyboard (15) at said another computer (11), revised variable text entered by said another person in response to said prompt messages and said variable text entered by said operator;
replacing (63) non write-protected variable text in said variable reply data with said revised variable text; and
merging (77) said revised variable text from said variable reply data into said shell document to create a merged document which contains the unchangeable text of said shell document and the unchanged portion of said variable text and said revised variable text to provide said structured document.

2. The method of claim 1 wherein said step of concatenating first includes the step of:
merging said variable text from said variable reply data into said shell document to create a merged portion which contains said invariable text of said shell document and said variable text to provide a merged portion to which said variable reply data and said shell detail data are concatenated instead of said shell document to create said work in progress document.

3. The method of claim 1 or 2 further including the step of retrieving (57) from a data bank variable text to be merged into the related shell document selected by said operator.

4. The method of claim 3 further indicating the step of modifying (61) said variable text retrieved from the databank if it is not write-protected.

5. A computer (11) controlled keyboard display workstation (15) comprising:
means in said computer (11) for receiving from another computer (21) controlled workstation, a work in progress document, said work in progress document including unchangeable text of a shell document, shell detail data, variable reply data and a non text unit type identifier;
means in said computer (11) for recognizing said non text unit type identifier and locating said non text unit in said work in progress document;
display means (15) controlled by said computer (11) for displaying to a person at said computer (11), from said shell detail data and said variable reply data, prompt messages and variable text previously entered by another person who created said work in progress document at said another computer (21);
a keyboard (15) controlled by said computer (11) for receiving revised variable text entered by said person in response to said prompt messages and said variable text entered by said another person;
means in said computer (11) for replacing non write-protected variable text in said variable reply data with said revised variable text; and
means in said computer (11) for merging said revised variable text from said variable reply data into said shell document to create a revised document containing the unchangeable text of said shell document and the unchanged portion of said variable text and said revised variable text.

6. A workstation including a computer (21), a keyboard (27), and a display (25) comprising:
display means (25) controlled by said computer (21) for displaying, from shell detail data prompt messages to a person at said computer (21), said prompt messages designating variable text to be entered by said person; a keyboard (27) coupled to said computer (21) for receiving said variable text to be entered by said person in response to said prompt messages;
means in said computer (21) for storing said variable text in a variable reply data area;
means for write protecting selected ones of said variable reply data;
means in said computer (21) for merging said variable text in said variable reply data area into a shell document of unchangeable text; and
means in said computer (21) for concatenating to said merged shell document, a non text unit type identifier and said shell detail and variable reply data area, located by said identifier, to create a work in progress document which can be sent to another work station (15) at another computer (11) for structured revision.

7. Workstation according to claim 6 further including means to retrieve said variable text from a databank; and
means for modifying said variable text retrieved from databank if no protect flag present.

8. Workstation according to any of claims 5-7 wherein said identifier is an RFTDCA non text unit.

## Patentansprüche

1. Verfahren zur Erstellung eines gegliederten Dokuments in einem Netz von aus Tastatur und Bildschirm bestehenden, von einem Computer (21) gesteuerten Einheiten, das folgende Schritte umfaßt:
An einen Bediener gerichtetes Anzeigen (61) von durch Shell-Detaildaten festgelegten Eingabeaufforderungen für besagten Bediener, die zur Eingabe von variablem Text auffordern, der mit dem unveränderlichen Text eines verbundenen konstanten Dokuments gemischt wird, das von besagtem Bediener ausgewählt wurde;
Lesen (61) des von besagtem Bediener als Antwort auf besagte Eingabeaufforderungen über besagte Tastatur (27) eingegebenen variablen Textes;
Einrichten von Variablen-Antwortdaten im Speicher des Computers (21), der besagten Bildschirm (25) für besagten Bediener steuert, welche besagten variablen Text enthalten, der von besagtem Bediener eingegeben wurde;
Verknüpfen (67) besagter Variablen-Antwortdaten und besagter Shell-Detaildaten mit besagtem konstanten Dokument zwecks Erstellung eines Work-In-Progress-Dokuments (in Arbeit befindliches Dokument, nachfolgend als WIP-Dokument bezeichnet), wobei besagtes konstantes Dokument von besagten Shell-Detaildaten und besagten Variablen-Antwortdaten durch eine Nichttexteinheit-Kennung getrennt wird;
Übertragen (69) des besagten WIP-Dokuments auf einen anderen Computer (11) in besagtem Netz;
Anzeigen (61) besagter Eingabeaufforderungen und des von besagtem Bediener eingegebenen besagten variablen Text aus besagten Shell-Detaildaten und besagten Variablen-Antwortdaten des besagten WIP-Dokuments für eine andere Person an besagtem anderen Computer (11);
Lesen (61) des als Antwort auf die besagten Eingabeaufforderungen und den von besagtem Bediener eingegebenen, besagten variablen Text über besagte Tastatur (15) an besagtem anderen Computer (11) von besagter anderer Person eingegebenen, überarbeiteten variablen Textes;
Ersetzen (63) des nicht schreibgeschützten variablen Textes durch besagten überarbeiteten variablen Text in besagten Variablen-Antwortdaten; und
Mischen (77) des besagten überarbeiteten variablen Textes aus besagten Variablen-Antwortdaten in besagtes konstantes Dokument zwecks Erstellung eines Mischdokuments, das den unveränderlichen Text des besagten konstanten Dokuments und den unveränderten Teil des besagten variablen Textes sowie den überarbeiteten variablen Text enthält, um besagtes gegliedertes Dokument bereitzustellen.

2. Verfahren nach Anspruch 1, dadurch gekennzeichnet, daß besagter Schritt der Verknüpfung zunächst folgenden Schritt einschließt:
Mischen des besagten variablen Textes aus besagten Variablen-Antwortdaten in besagtes konstantes Dokument, um einen Mischteil zu erstellen, der besagten unveränderlichen Text des besagten konstanten Dokuments und besagten variablen Text enthält, zwecks Bereitstellung eines Mischteils, mit dem besagte Variablen-Antwortdaten und besagte Shell-Detaildaten anstelle von besagtem konstanten Dokument zur Erstellung des besagten WIP-Dokuments verknüpft werden.

3. Verfahren nach Anspruch 1 oder 2, dadurch gekennzeichnet, daß als zusätzlicher Schritt ein Abruf (57) von variablem Text aus einer Datenbank erfolgt, der in das unveränderliche konstante Dokument gemischt werden soll, das von besagtem Bediener ausgewählt wurde.

4. Verfahren nach Anspruch 3, zusätzlich dadurch gekennzeichnet, daß eine Änderung (61) des besagten variablen Textes, der aus der Datenbank abgerufen wurde, erfolgt, wenn dieser nicht schreibgeschützt ist.

5. Eine von einem Computer (11) gesteuerte Datenstation (15), bestehend aus Tastatur und Bildschirm, die folgendes umfaßt:
Mittel in besagtem Computer (11) zum Empfangen eines WIP-Dokuments von einer anderem, von einem Computer (21) gesteuerten Datenstation, wobei besagtes WIP-Dokument unveränderlichen Text eines konstanten Dokuments, Shell-Detaildaten, Variablen-Antwortdaten und eine Nichttexteinheit-Kennung umfaßt;
Mittel in besagtem Computer (11) zur Erkennung der besagten Nichttexteinheit-Kennung und der Lokalisierung der besagten Nichttexteinheit im WIP-Dokument;
Von besagtem Computer (11) gesteuerte Anzeigemittel (15) zum Anzeigen einer Person an besagtem Computer (11) der aus besagten Shell-Detaildaten und besagten Variablen-Antwortdaten erzeugten Eingabeaufforderungen und variablen Textes, der zuvor von einer anderen Person eingegeben wurde, die besagtes WIP-Dokument an besagtem anderen Computer (21) erstellt hat;
Eine von besagtem Computer (11) gesteuerte Tastatur (15) zum Entgegennehmen des überarbeiteten variablen Textes, der von besagter Person als Antwort auf besagte Eingabeaufforderungen und besagten variablen Text eingegeben wird, der von besagter anderer Person eingegeben wurde;
Mittel in besagtem Computer (11) zum Ersetzen des nicht schreibgeschützten variablen Textes in besagten Variablen-Antwortdaten durch besagten überarbeiteten variablen Text; und
Mittel in besagtem Computer (11) zum Mischen des besagten überarbeiteten variablen Textes aus besagten Variablen-Antwortdaten in besagtes konstantes Dokument, zwecks Erstellung eines überarbeiteten Dokuments, das den unveränderlichen Text des besagten konstanten Dokuments sowie den unveränderten Teil des besagten variablen Textes und besagten überarbeiteten variablen Text umfaßt.

6. Eine Datenstation, die aus einem Computer (21), einer Tastatur (27) und einem Bildschirm (25) besteht und folgendes umfaßt:
Von besagtem Computer (21) gesteuerte Anzeigemittel (25) zum Anzeigen einer Person an dem besagten Computer (21) der Eingabeaufforderungen aus Shell-Detaildaten, wobei besagte Eingabeaufforderungen den variablen Text bezeichnen, der von besagter Person einzugeben ist; eine mit besagtem Computer (21) verbundene Tastatur (27) zum Entgegennehmen des besagten variablen Textes, der von besagter Person als Antwort auf besagte Eingabeaufforderungen einzugeben ist;
Mittel in besagtem Computer (21) zur Speicherung des besagten variablen Textes in einem Datenbereich für Variablen-Antwortdaten;
Mittel zum Versehen ausgewählter Teile besagter Variablen-Antwortdaten mit einem Schreibschutz;
Mittel in besagtem Computer (21) zum Mischen des besagten variablen Textes, der sich in besagtem Datenbereich für Variablen-Antwortdaten befindet, mit einem konstanten Dokument, das aus unveränderlichem Text besteht; und
Mittel in besagtem Computer (21) zum Verbinden einer Nichttexteinheit-Kennung und besagtes Shell-Detail- und Variablen-Antwortdatenbereiches, der mit Hilfe der besagten Kennung lokalisiert wird, mit dem besagten gemischten konstanten Dokument, um ein WIP-Dokument zu erstellen, das zur strukturierten Überarbeitung an eine andere Datenstation (15) an einem anderen Computer (11) gesendet werden kann.

7. Ein Datenstation nach Anspruch 6, dadurch gekennzeichnet, daß sie weiterhin Mittel für den Abruf von besagtem variablen Text aus einer Datenbank aufweist; und
Mittel zur Änderung des besagten aus der Datenbank abgerufenen variablen Textes, sofern kein Schutzkennzeichen vorliegt.

8. Datenstation nach einem beliebigen der Ansprüche 5-7, bei der besagte Kennung eine RFTDCA-Nichttexteinheit darstellt.

## Revendications

1. Procédé pour préparer un document structuré dans un réseau d'écran de visualisation à clavier commandé par ordinateur (21) comprenant les étapes consistant à :
afficher (61) pour un opérateur, à partir de données de détail de base, des messages de guidage audit opérateur qui sollicite l'entrée d'un texte variable qui doit être fusionné en texte non modifiable d'un canevas comprenant des zones variables à compléter qui a été sélectionné par ledit opérateur ;
lire (61) à partir dudit clavier (27) ledit texte variable entré par ledit opérateur en réponse audit message de guidage ;
établir dans la mémoire de l'ordinateur (21) commandant ledit écran de visualisation (25) audit opérateur les données de réponse variable contenant ledit texte variable entré par ledit opérateur ;
concaténer (67) lesdites données de réponse variable et lesdites données de détail de base audit canevas pour créer un document en cours, ledit canevas étant séparé des données de détail de base et desdites données de réponse variable par un identificateur de type d'unité qui n'est pas du texte ;
transmettre (69) ledit document en cours à un autre ordinateur (11) dans ledit réseau ;
visualiser (61) pour une autre personne à l'autre dit ordinateur (11) à partir des données de détail de base et des données de réponse variable dudit document en cours, lesdits messages de guidage et ledit texte variable entrés par ledit opérateur ;
lire (61) à partir du clavier (15) audit autre ordinateur (11), le texte variable corrigé entré par ladite autre personne en réponse auxdits messages de guidage et ledit texte variable entré par ledit opérateur ;
replacer (63) le texte variable non protégé en écriture dans lesdites données de réponse variable avec ledit texte variable corrigé, et
fusionner (77) ledit texte variable corrigé à partir desdites données de réponse variable dans ledit canevas pour créer un document fusionné qui contient les textes non modifiables dudit canevas et la partie non changée dudit texte variable et dudit texte variable corrigé pour procurer ledit document structuré.

2. Procédé selon la revendication 1, dans lequel ladite étape de concaténation comporte tout d'abord l'étape consistant à :
fusionner ledit texte variable à partir des données de réponse variable dans ledit canevas pour créer une partie fusionnée qui contient ledit texte non variable dudit canevas et dudit texte variable pour procurer une partie fusionnée à laquelle lesdites données de réponse variable et lesdites données de détail de base sont concaténées au lieu dudit canevas pour créer ledit document en cours.

3. Procédé selon la revendication 1 ou 2, comportant de plus l'étape consistant à rechercher (57) à partir d'une banque de données, le texte variable qui doit être fusionné dans le canevas apparenté sélectionné par ledit opérateur.

4. Procédé selon la revendication 3, indiquant de plus l'étape consistant à modifier (61) ledit texte variable recherché à partir de la banque de données s'il n'est pas protégé en écriture.

5. Station de travail (15) à écran de visualisation à clavier commandé par ordinateur (11) comprenant :
un moyen dans ledit ordinateur (11) pour recevoir d'une autre station de travail commandée par un ordinateur (21) un document en cours, ledit document en cours comportant un texte non changeable d'un canevas comprenant des zones variables à compléter, des données de détail de base, des données de réponse variable et un identificateur du type d'unité de non texte ;
un moyen dans ledit ordinateur (11) pour reconnaître ledit identificateur du type d'unité de non texte et pour trouver ladite unité de non texte dans ledit document en cours ;
un moyen de visualisation (15) commandé par ledit ordinateur (11) pour visualiser pour une personne audit ordinateur (11) à partir des données de détail de base et des données de réponse variable, des messages de guidage et du texte variable précédemment entré par une autre personne qui a créé ledit document en cours audit autre ordinateur (21) ;
un clavier (15) commandé par ledit ordinateur (11) pour recevoir le texte variable corrigé entré par ladite personne en réponse audit message de guidage et ledit texte variable entré par ladite autre personne ;
un moyen dans ledit ordinateur (11) pour remplacer le texte variable non protégé en écriture dans lesdites données de réponse variable avec ledit texte variable corrigé, et
un moyen dans ledit ordinateur (11) pour fusionner ledit texte variable corrigé à partir des données de réponse variable dans ledit document de base pour créer un document corrigé contenant le texte non modifiable dudit document de base et la partie non modifiée dudit texte variable et ledit texte variable corrigé.

6. Station de travail comportant un ordinateur (21), un clavier (27) et un écran de visualisation (25) comprenant :
un moyen de visualisation (25) commandé par ledit ordinateur (21) pour visualiser à partir de données de détails de base des messages de guidage à une personne audit ordinateur (21), lesdits messages de guidage désignant le texte variable qui doit être entré par ladite personne ; un clavier (27) couplé audit ordinateur (21) pour recevoir ledit texte variable qui doit être entré par ladite personne en réponse audit message de guidage ;
un moyen dans ledit ordinateur (21) pour mémoriser ledit texte variable dans une zone de données de réponse variable ;
un moyen pour protéger en écriture certaines données sélectionnées desdites données de réponse variable ;
un moyen dans ledit ordinateur (21) pour fusionner ledit texte variable dans ladite zone de données de réponse variable en un canevas comprenant des zones variables à compléter, de texte non modifiable, ledit canevas comprenant :
un moyen dans ledit ordinateur (21) pour concaténer ledit canevas fusionné, un identificateur de type d'unité qui n'est pas du texte et ladite zone de données de détail de base et de réponse variable, trouvée par ledit identificateur pour créer un document en cours qui peut être envoyé à une autre station de travail (15) à un autre ordinateur (11) pour correction structurée.

7. Station de travail selon la revendication 6, comportant de plus un moyen pour rechercher ledit texte variable à partir d'une banque de données, et
un moyen pour modifier ledit texte variable retrouvé à partir de la banque de données en absence d'indicateur de protection.

8. Station de travail selon l'une quelconque des revendications 5 à 7, dans laquelle ledit identificateur est une unité de non texte RFTDCA.
